# EUROPEAN PATENT APPLICATION

(11) **EP 1 965 312 A2**
(43) Date of publication of application: **03.09.2008**
(21) Application number: 08152077.7
(22) Date of filing: 28.02.2008
(51) Int. Cl.: G06F 17/27, G06F 17/30, H04N 5/00

(54) **Information processing apparatus and method, program, and storage medium**

(30) Priority: 01.03.2007 JP 2007051355; 07.08.2007 JP 2007205082; 26.11.2007 JP 2007303992
(71) Applicant: Sony Corporation, Tokyo (JP)
(72) Inventor: TAKAGI, Tsuyoshi c/o SONY CORPORATION, Tokyo (JP)
(74) Representative: Thévenet, Jean-Bruno

(57) **Abstract**

An information processing apparatus includes: an acquiring section (12, 14) acquiring metadata of content; a morphological analysis section (15) performing a morphological analysis of text information included in the metadata of the content; a genre extracting section (19) extracting genre information for each individual content in the metadata of the content; and a keyword extracting section (18) extracting words with attributes that have relevance to the genre of predetermined content in the metadata of the content by a morphological analysis result of the morphological analysis section (15).

## Description

### CROSS REFERENCES TO RELATED APPLICATIONS

The present invention contains subject matter related to Japanese Patent Application JP 2007-051355 filed in the Japanese Patent Office on March 1, 2007, Japanese Patent Application JP 2007-205082 filed in the Japanese Patent Office on August 7, 2007 and Japanese Patent Application JP 2007-303992 filed in the Japanese Patent Office on November 26, 2007, the entire contents of which are incorporated herein by reference.

### BACKGROUND OF THE INVENTION

### 1. Field of the Invention

The present invention relates to an information processing apparatus and method, a program, and a storage medium. More specifically, the present invention relates to an information processing apparatus and method, a program, and a storage medium which make it possible to efficiently extract the most appropriate keywords that represent features of content from information included in the metadata of the content.

### 2. Description of the Related Art

A technique for selecting a program that is content by using an electric program guide called EPG including metadata of content, or for reserving a program selected on the EPG is becoming increasingly commonplace.

There has been proposed a technique for making it possible to reliably and easily extract as information more appropriate keywords used for automatic recording (see Japanese Unexamined Patent Application Publication No. 2006-339947).

Further, there has been proposed a technique for retrieving a desired program reliably even in a case where program titles included in the EPG have been omitted due to the passage of time (see Japanese Unexamined Patent Application Publication No. 2004-134858).

### SUMMARY OF THE INVENTION

However, in the related art, the following problem arises when attempting to efficiently extract the most appropriate keywords that represent features of a program as content from content metadata such as the EPG. That is, although place names or personal names can be found out by a morphological analysis, it may be difficult to distinguish whether they are the most appropriate keywords that represent features of a program. Accordingly, there are cases where keywords are extracted from the EPG irrespective of whether they are the most appropriate keywords that represent features of a program, with the result that it is often difficult to recognize features of a program by looking at the extracted keywords alone.

It is thus desirable to make it possible to efficiently extract the most appropriate keywords representing features of a program as content, from information included in the metadata of content such as an electric program guide (EPG), in particular.

An information processing apparatus according to an embodiment of the present invention includes: acquiring means for acquiring metadata of content; morphological analysis means for performing a morphological analysis of text information included in the metadata of the content; genre extracting means for extracting genre information for each individual content in the metadata of the content; and keyword extracting means for extracting words with attributes that have relevance to the genre of predetermined content in the metadata of the content by a morphological analysis result of the morphological analysis means.

The morphological analysis means may further include exclusion means for excluding personal names and words that have little relevance to the substance of description of the content, and the keyword extracting means may extract the words with the attributes that have relevance to the genre of the predetermined content in the metadata of the content, from the morphological analysis result of the morphological analysis means from which the personal names and the words that have little relevance to the substance of description of the content are excluded by the exclusion means.

The keyword extracting means may further include proper-noun extracting means for extracting proper nouns and words with attributes other than the attributes that have relevance to the genre of the predetermined content from the morphological analysis result, if the number of the words with the attributes that have relevance to the genre of the predetermined content in the metadata of the content, which are extracted from the morphological analysis result of the morphological analysis means, is not larger than a predetermined number.

The information processing apparatus may further include storage means for storing a correspondence between the genre in the metadata of the content and the attributes that have relevance to the genre, and the keyword extracting means may determine the attributes that have relevance to the genre of the predetermined content in the metadata of the content on the basis of the correspondence between the genre and the attributes that have relevance to the genre which is stored in the storage means, and extracts the determined words from the morphological analysis result of the morphological analysis means.

The information processing apparatus may further include counting means for counting an occurrence frequency of the same word in the morphological analysis result of the morphological analysis means, and the keyword extracting means may extract the words with the attributes that have relevance to the genre of the predetermined content in the metadata of the content in the order of the highest occurrence frequency as counted by the counting means, from the morphological analysis result of the morphological analysis means.

The genre may include a main genre and a sub-genre.

The content may include a television program, and the metadata may include information related to the television program.

An information processing method according to an embodiment of the present invention includes the steps of: acquiring metadata of content; performing a morphological analysis of text information included in the metadata of the content; extracting genre information for each individual content in the metadata of the content; and extracting words with attributes that have relevance to the genre of predetermined content in the metadata of the content by a morphological analysis result of the morphological analysis.

A program according to an embodiment of the present invention causes a computer to execute processing including the steps of: acquiring metadata of content; performing a morphological analysis of text information of the metadata of the content; extracting genre information for each individual content in the metadata of the content; and extracting words with attributes that have relevance to the genre of predetermined content in the metadata of the content by a morphological analysis result of the morphological analysis.

A program storage medium may store the program according to the above-mentioned embodiment.

In the information processing apparatus and method, and the program according to an embodiment of the present invention, metadata of content is acquired, text information included in the metadata of the content is subjected to a morphological analysis, genre information for each individual content in the metadata of the content is extracted, and words with attributes that have relevance to the genre of predetermined content in the metadata of the content are extracted from a morphological analysis result.

The information processing apparatus according to an embodiment of the present invention may be an independent apparatus or a block that performs information processing.

According to an embodiment of the present invention, it is possible to extract the most appropriate keywords that represent features of content from information included in the metadata of the content.

### BRIEF DESCRIPTION OF THE DRAWINGS

Fig. 1 is a block diagram showing an example of the configuration of an information processing apparatus to which the present invention is applied;
Fig. 2 is a diagram illustrating the relationship between genres and keyword attributes;
Fig. 3 is a diagram illustrating the relationship between genres and keyword attributes;
Fig. 4 is a diagram illustrating the relationship between genres and keyword attributes;
Fig. 5 is a flowchart illustrating a keyword extracting process;
Fig. 6 is a diagram illustrating an example of display of a display screen;
Fig. 7 is a diagram illustrating keyword attributes;
Fig. 8 is a diagram illustrating a keyword extracting process;
Fig. 9 is a flowchart illustrating an out-of-genre keyword extracting process;
Fig. 10 is a flowchart illustrating a noun extracting process;
Fig. 11 is a diagram illustrating an example of display of a keyword display screen;
Fig. 12 is a diagram illustrating an example of a display screen displayed upon selecting a keyword; and
Fig. 13 is a diagram illustrating an example of the configuration of a personal computer.

### DESCRIPTION OF THE PREFERRED EMBODIMENTS

Before describing an embodiment of the present invention, the correspondence between the features of the present invention and embodiments disclosed in this specification is discussed below. This description is intended to assure that an embodiment(s) supporting the present invention are described in this specification. Thus, even if an embodiment in the following description is not described as relating to a certain feature of the present invention, that does not necessarily mean that the embodiment does not relate to that feature of the present invention. Conversely, even if an embodiment is described herein as relating to a certain feature of the present invention, that not necessarily mean that the embodiment does not relate to other features of the present invention.

Furthermore, this description is not intended to provide an exhaustive description of all of the aspects of the present invention. That is, the description does not deny the existence of aspects of the present invention that are described in this specification but not claimed in this application, i.e., the existence of aspects of the present invention that in future may be claimed by a divisional application, or that may be additionally claimed through amendments.

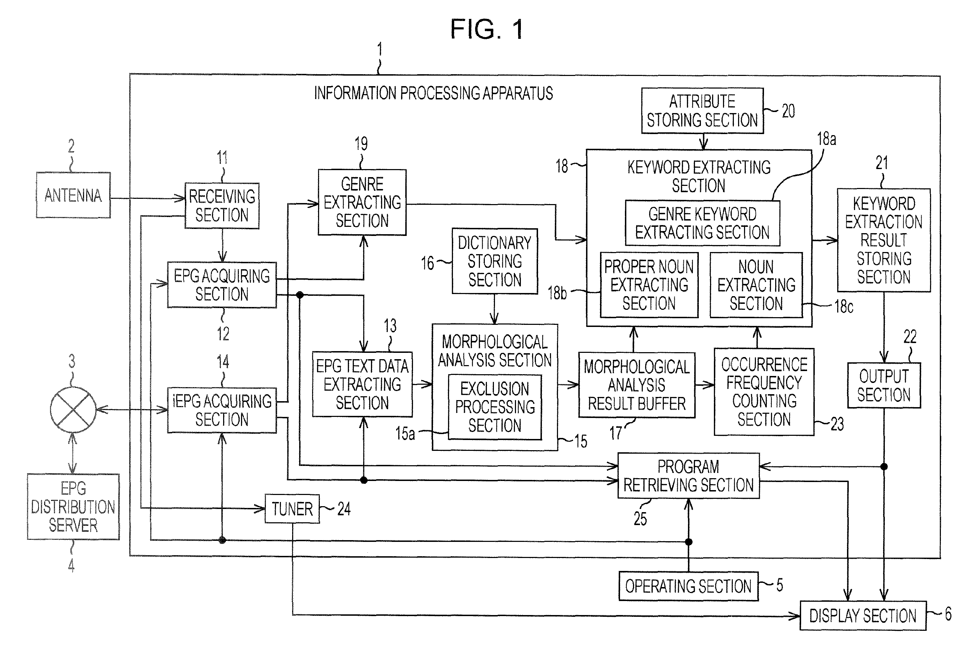

That is, an information processing apparatus according to an embodiment of the present invention includes: acquiring means (for example, an EPG acquiring section 12 or iPEG acquiring section 14 in Fig. 1) for acquiring metadata of content; morphological analysis means (for example, a morphological analysis section 15 in Fig. 1) for performing a morphological analysis of text information included in the metadata of the content; genre extracting means (for example, a genre extracting section 19 in Fig. 1) for extracting genre information for each individual content in the metadata of the content; and keyword extracting means (for example, a genre keyword extracting section 18a in Fig. 1) for extracting words with attributes that have relevance to the genre of predetermined content in the metadata of the content by a morphological analysis result of the morphological analysis means.

The morphological analysis means may further include exclusion means (for example, an exclusion processing section 15a in Fig. 1) for excluding personal names and words that have little relevance to the substance of description of the content, and the keyword extracting means may extract the words with the attributes that have relevance to the genre of the predetermined content in the metadata of the content, from the morphological analysis result of the morphological analysis means from which the personal names and the words that have little relevance to the substance of description of the content are excluded by the exclusion means.

The keyword extracting means may further include proper-noun extracting means (for example, a proper-noun keyword extracting section 18b in Fig. 1) for extracting proper nouns and words with other than the attributes that have relevance to the genre of the predetermined content from the morphological analysis result, if the number of the words with the attributes that have relevance to the genre of the predetermined content in the metadata of the content, which are extracted from the morphological analysis result of the morphological analysis means, is not larger than a predetermined number.

The information processing apparatus may further include storage means (for example, an attribute storing section 20 in Fig. 1) for storing a correspondence between the genre in the metadata of the content and the attributes that have relevance to the genre, and the keyword extracting means (for example, a genre keyword extracting section 18a in Fig. 1) may determine the attributes that have relevance to the genre of the predetermined content in the metadata of the content on the basis of the correspondence between the genre and the attributes that have relevance to the genre which is stored in the storage means, and extracts the determined words from the morphological analysis result of the morphological analysis means.

The information processing apparatus may further include counting means (for example, an occurrence frequency counting section 23 in Fig. 1) for counting an occurrence frequency of the same word in the morphological analysis result of the morphological analysis means, and the keyword extracting means (for example, a genre keyword extracting section 18a in Fig. 1) may extract the words with the attributes that have relevance to the genre of the predetermined content in the metadata of the content in the order of the highest occurrence frequency as counted by the counting means, from the morphological analysis result of the morphological analysis means.

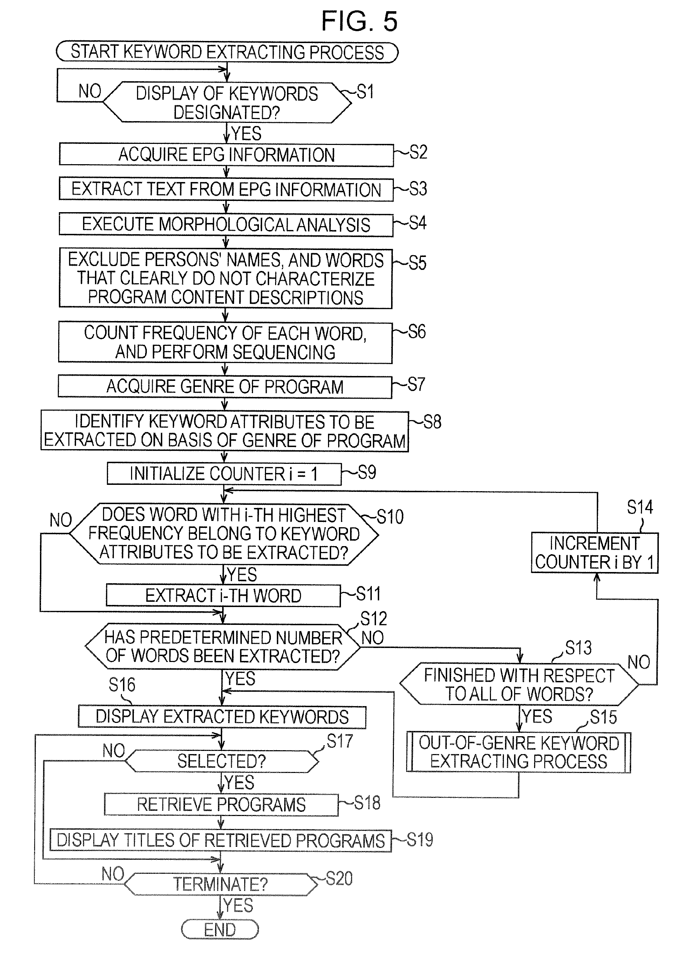

An information processing method according to an embodiment of the present invention includes the steps of: acquiring metadata of content (for example, step S2 in Fig. 5); performing a morphological analysis of text information included in the metadata of the content (for example, step S4 in Fig. 5); extracting genre information for each individual content in the metadata of the content (for example, step S7 in Fig. 5); and extracting words with attributes that have relevance to the genre of predetermined content in the metadata of the content by a morphological analysis result of the morphological analysis (for example, step S11 in Fig. 5).

Fig. 1 shows an information processing apparatus according to an embodiment of the present invention.

An information processing apparatus 1 shown in Fig. 1 acquires an EPG (Electric Program Guide) including the metadata of content distributed via a network typically represented by the Internet or the like, a broadcast wave, or the like, extracts the most appropriate keywords that represent features of a program from program (content) information included in the EPG, and displays a program that corresponds to the keywords selected with an operating section 5, such as an operating button or a remote control that is a keyboard, from among the extracted keywords.

A receiving section 11 receives broadcast waves via an antenna 2, and supplies the broadcast waves to an EPG acquiring section 12 and a tuner 24. The EPG acquiring section 12 acquires EPG (Electric Program Guide) information from signals supplied from the receiving section 11, and supplies the EPG information to an EPG text data extracting section 13, a genre extracting section 19, and a program retrieving section 25.

An iEPG acquiring section 14 accesses an EPG distribution server 4 specified by a predetermined URL (Uniform Resource Locator) or the like via the network 3 typically represented by the Internet, acquires EPG information, and supplies the EPG information to the EPG text data extracting section 13, the genre extracting section 19, and the program retrieving section 25.

The EPG text data extracting section 13 extracts text data from each of the EPG information supplied from the EPG acquiring section 12 and the EPG information supplied from the iEPG acquiring section 14, and supplies the text data to a morphological analysis section 15.

The morphological analysis section 15 divides the text data of the EPG information into the smallest meaningful units of language (hereinafter, this is referred to as words), identifies the word class of each of the words through comparison against information registered in a dictionary storing section 16, thereby executing a morphological analysis process. The morphological analysis section 15 then stores the results of the morphological analysis into a morphological analysis result buffer 17. Further, the morphological analysis section 15 controls an exclusion processing section 15a so as to exclude (eliminate) target words to be excluded, such as personal names and words that clearly do not represent features of program description, from the text data stored in the morphological analysis section 15, and supplies other words to the morphological analysis section 15. Words that clearly do not represent features of program description are those words such as interruption, pause, recording, or URL (Uniform Resource Locator) or WWW (World Wide Web). Of the word classes classified by the morphological analysis process, the morphological analysis section 15 classifies the words classified as so-called nouns, such as general nouns and proper nouns, into more finely defined keyword attributes described later.

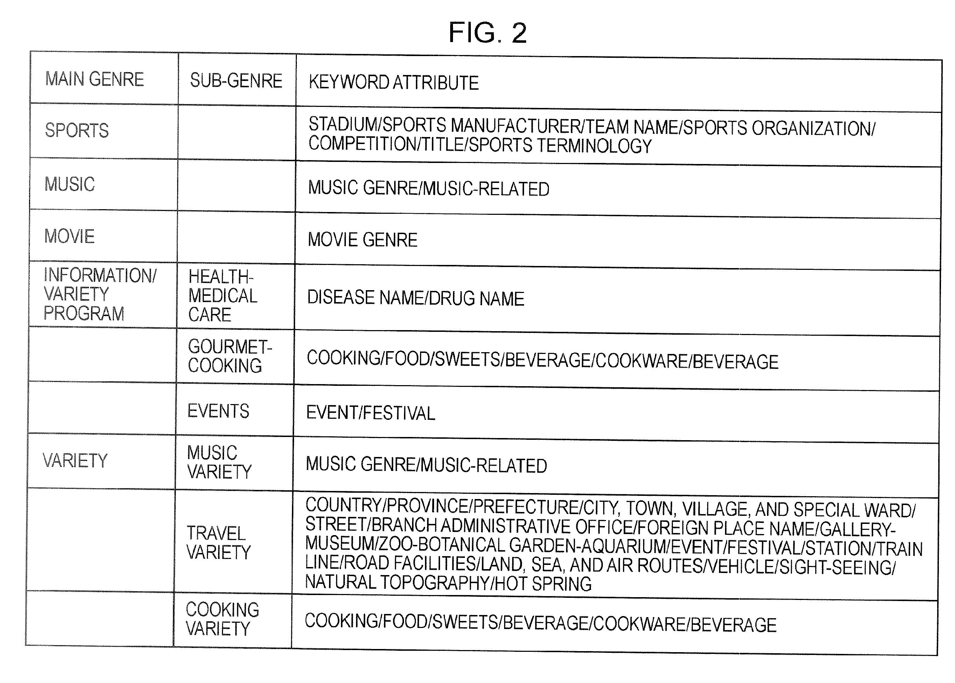

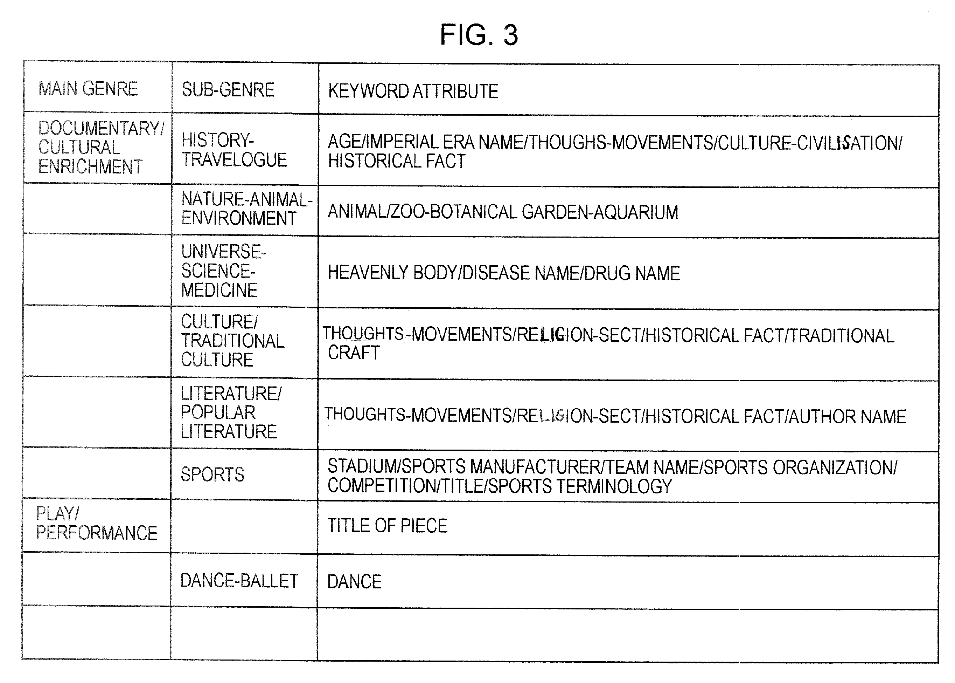

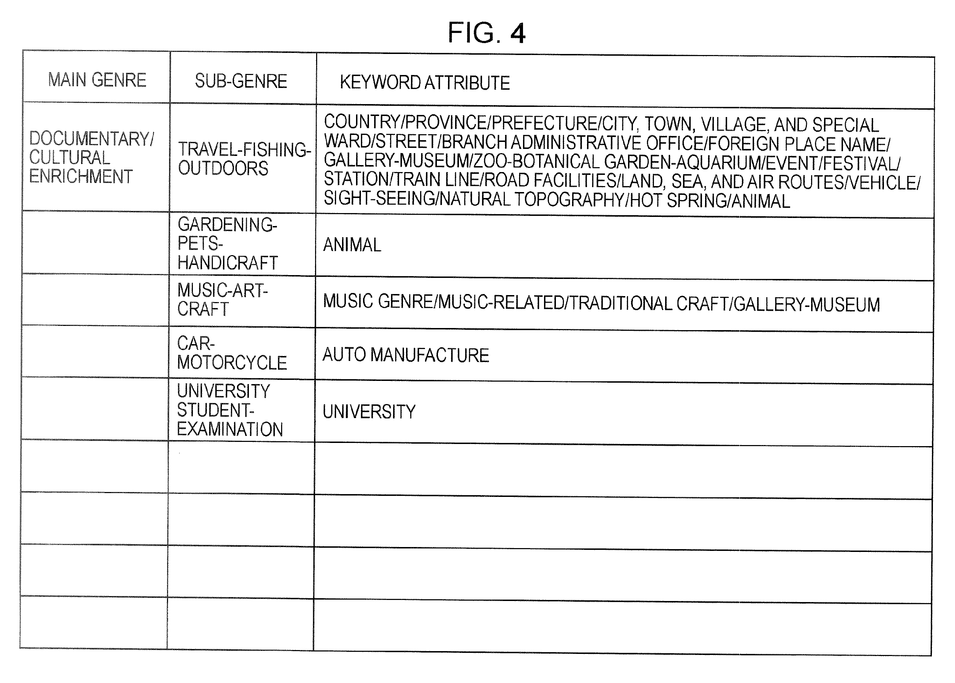

The genre extracting section 19 extracts genre information set for each individual program included in the EPG information and supplies the information to a keyword extracting section 18. More specifically, as shown in Figs. 2 to 4, genres included in the EPG information are grouped into main genres and sub-genres. The genre extracting section 19 extracts information of main genres and sub-genres included in the EPG information and supplies the information to the keyword extracting section 18.

As shown in Figs. 2 to 4, main genres include, for example, Sports, Music, Movie, Information/Variety Program, Variety, Documentary/Cultural Enrichment, and Hobby/Education.

Sub-genres are genres included in the main genres. For example, if a main genre is Information/Variety Program, the main genre includes the following sub-genres: Health-Medical Care, Gourmet-Cooking, and Events. Also, if a main genre is Variety, the main genre includes the following sub-genres; Music Variety, Travel Variety, and Cooking Variety. Further, if a main genre is Documentary/Cultural Enrichment, the main genre includes the following sub-genres: History and Travelogue, Nature-Animal-Environment, Universe-Science-Medicine, Culture-Traditional Culture, Literature-Popular Literature, and Sports. Further, the main genre Play/Performance includes a sub-genre of Dance-Ballet. Further, if a main genre is Hobby/Education, the main genre includes the following sub-genres: Travel-Fishing-Outdoors, Gardening-Pets-Handicraft, Music-Art-Craft, Car-Motorcycle, and University Student-Examination.

An occurrence frequency counting section 23 counts the frequency of occurrence of each word in the morphological analysis results stored in the morphological analysis result buffer 17, and sorts the words by the highest occurrence frequency.

The keyword extracting section 18 includes a genre keyword extracting section 18a, a proper-noun extracting section 18b, and a noun extracting section 18c. The genre keyword extracting section 18a accesses an attribute storing section 20, and reads keyword attributes set in advance for main genres and sub-genres supplied from the genre extracting section 19. Then, on the basis of information from the occurrence frequency counting section 23, the keyword extracting section 18 determines, in order from keywords with higher occurrence frequencies, whether or not individual keywords correspond to target keyword attributes, and stores only those keywords corresponding to target keyword attributes into a keyword extraction result storing section 21.

More specifically, if the main genre of a program is Sports, the keyword attributes to be extracted are Stadium, Sports Manufacturer, Team Name, Sports Organization, Competition, Title, and Sports Terminology. In this case, Sports Organization refers to, for example, the Japan High School Baseball Federation, and Title refers to, for example, the Golden Club Award. Further, if the main genre of a program is Music, the keyword attributes to be extracted are Music Genre and Music-related. In this case, Music-related refers to musical instruments, musical note names, or the like.

If the main genre of a program is Information/Variety Program, and the sub-genre is Health-Medical Care, the keyword attributes to be extracted are Disease Name and Drug Name. Further, if the main genre of a program is Information/Variety Program, and the sub-genre is Gourmet-Cooking, the keyword attributes to be extracted are Cooking, Food, Sweets, Beverage, Cookware, and Beverage. Further, if the main genre of a program is Information/Variety Program, and the sub-genre is Events, the keyword attributes to be extracted are Event and Festival.

If the main genre of a program is Variety, and the sub-genre is Music Variety, the keyword attributes to be extracted are Music Genre and Music-related. Further, if the main genre of a program is Variety, and the sub-genre is Travel Variety, the keyword attributes to be extracted are Country, Province, Prefecture, City, Town, Village, and Special Ward, Street, Branch Administrative Office, Foreign Place Name, Gallery-Museum, Zoo-Botanical Garden-Aquarium, Event, Festival, Station, Train Line, Road Facilities, Land, Sea, and Air Routes, Vehicle, Sight-seeing, Natural Topography, and Hot Spring. Further, if the main genre of a program is Variety, and the sub-genre is Cooking Variety, the keyword attributes to be extracted are Cooking, Food, Sweets, Beverage, Cookware, and Beverage.

If the main genre of a program is Documentary/Cultural Enrichment, and the sub-genre is History-Travelogue, the keyword attributes to be extracted are Age, Era Name, Thoughts-Movements, Culture-Civilization, and Historical Fact. In this case, Era Name refers to, for example, the Ansei era or the Onin era, Thoughts refers to, for example, Marxism or Leninism, and Culture-Civilization refers to, for example, the Indus civilization.

If the main genre of a program is Documentary/Cultural Enrichment, and the sub-genre is Nature-Animal-Environment, the keyword attributes to be extracted are Animal, and Zoo-Botanical Garden-Aquarium. Further, if the main genre of a program is Documentary/Cultural Enrichment, and the sub-genre is Universe-Science-Medicine, the keyword attributes to be extracted are Heavenly Body, Disease Name, and Drug Name. In this case, Heavenly Body refers to, for example, names or star names.

If the main genre of a program is Documentary/Cultural Enrichment, and the sub-genre is Culture-Traditional Culture, the keyword attributes to be extracted are Thoughts-Movements, Religion-Sect, Historical Fact, and Traditional Craft. In this case, Traditional Craft refers to, for example, Kutani ware or Wajima ware. Further, if the main genre of a program is Documentary/Cultural Enrichment, and the sub-genre is Literature-Popular Literature, the keyword attributes to be extracted are Thoughts-Movements, Religion-Sect, Historical Fact, and Title of Piece.

If the main genre of a program is Documentary/Cultural Enrichment, and the sub-genre is Sports, the keyword attributes to be extracted are Stadium, Sports Manufacturer, Team Name, Sports Organization, Competition, Title, and Sports Terminology.

Further, if the main genre of a program is Play/Performance, the keyword attribute to be extracted is Title of Piece. If the main genre of a program is Play/Performance, and the sub-genre is Dance-Ballet, the keyword attribute to be extracted is Dance. In this case, Dance refers to, for example, the quickstep or modern dance.

If the main genre of a program is Hobby/Education, and the sub-genre is Travel-Fishing-Outdoors, the keyword attributes to be extracted are Country, Province, Prefecture, City, Town, Village, and Special Ward, Street, Branch Administrative Office, Foreign Place Name, Gallery-Museum, Zoo-Botanical Garden-Aquarium, Event, Festival, Station, Train Line, Road Facilities, Land, Sea, and Air Routes, Vehicle, Sight-seeing, Natural Topography, Hot Spring, and Animal.

If the main genre of a program is Hobby/Education, and the sub-genre is Gardening-Pets-Handicraft, the keyword attribute to be extracted is Animal. Further, if the main genre of a program is Hobby/Education, and the sub-genre is Music-Art-Craft, the keyword attributes to be extracted are Music Genre, Music-related, Traditional Craft, and Gallery-Museum.

If the main genre of a program is Hobby/Education, and the sub-genre is Car-Motorcycle, the keyword attribute to be extracted is Auto Manufacturer. Further, if the main genre of a program is Hobby/Education, and the sub-genre is University Student-Examination, the keyword attribute to be extracted is University.

If the number of keywords extracted on the basis of keyword attributes of a target genre is less than a predetermined number, the proper-noun extracting section 18b further extracts, as keywords, words with attributes that do not match (have no relevance to) the target genre, and proper-noun keyword attributes.

In a case where the number of keywords extracted on the basis of keyword attributes of a target genre is less than a predetermined number, and the number of extracted keywords is still less than the predetermined number even when keywords are extracted by the proper-noun extracting section 18b on the basis of attributes that do not match (have no relevance to) the genre or proper-noun keyword attributes, the noun extracting section 18c further extracts words with noun keyword attributes as keywords from among words belonging to the target genre and keyword attributes other than proper-noun keyword attributes.

Next, referring to Fig. 5, a keyword extracting process will be described.

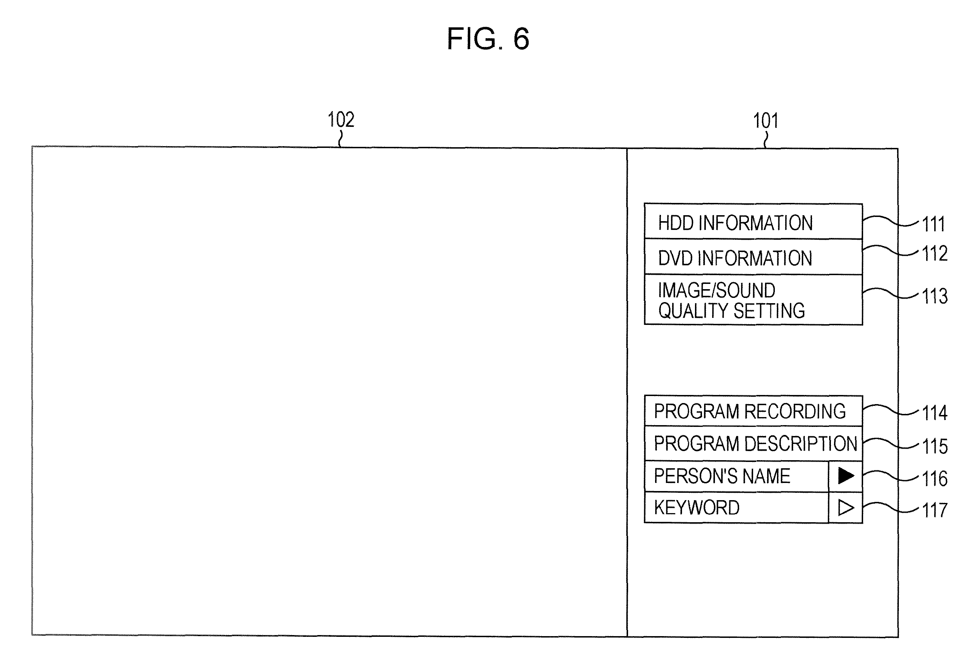

In step S1, the EPG acquiring section 12 or the iEPG acquiring section 14 determines whether or not the operating section 5 has been operated and display of keywords has been designated, and the same process is repeated until it is determined that display of keywords has been designated. For example, an option tab 101 as shown in Fig. 6 is displayed, and when a button 117 indicating a keyword extracting process is operated, it is regarded that display of keywords has been designated, and the process proceeds to step S2.

It should be noted that Fig. 6 shows an example of image displayed on a display section 6. A display field 102 for a standard broadcast program that is being selected by a tuner 24 is displayed on the left side of the option tab 101. In the option tab 101, buttons 111 to 117 indicated as "HDD information", "DVD information", "image/sound quality setting" "program recording" "program description", "personal name" and "keyword" are displayed in order from the top to bottom. The button 111 is operated when displaying information of a program recorded on an HDD (Hard Disk Drive) (not shown). The button 112 is operated when displaying information of a program recorded on a DVD inserted in a DVD (Digital Versatile Disk) drive (not shown). The button 113 is operated when executing image/sound quality setting. The button 114 is operated when executing program recording. The button 115 is operated when displaying description of a program that is displayed in the display field 102 included in the EPG. The button 116 is operated when displaying the names of the cast members of a program that is displayed in the display field 102 included in the EPG as personal names. The button 117 is operated when displaying keywords for a program that is displayed in the display field 102 included in the EPG.

In step S2, the EPG acquiring section 12 acquires EPG information included in the broadcast waves received by the antenna 2 via the receiving section 11, and supplies the EPG information to the EPG text data extracting section 13. Further, the iEPG acquiring section 14 accesses the EPG distribution server 4 on the network 3 which is specified by a predetermined URL, and acquires EPG information and supplies the EPG information to the EPG text data extracting section 13 and the genre extracting section 19.

In step S3, the EPG text data extracting section 13 extracts text data from the supplied EPG information and supplies the text data to the morphological analysis section 15.

In step S4, on the basis of information stored in the dictionary storing section 16, the morphological analysis section 15 divides the text data of the EPG information supplied into words, identifies the word class of each of the words, and stores the word class into the morphological analysis result buffer 17.

In step S5, the morphological analysis section 15 controls the exclusion processing section 15a so that, of the words stored in the morphological analysis result buffer 17, personal names and words that clearly do not represent features of program description are eliminated from target keyword attributes, and excluded from words to be extracted.

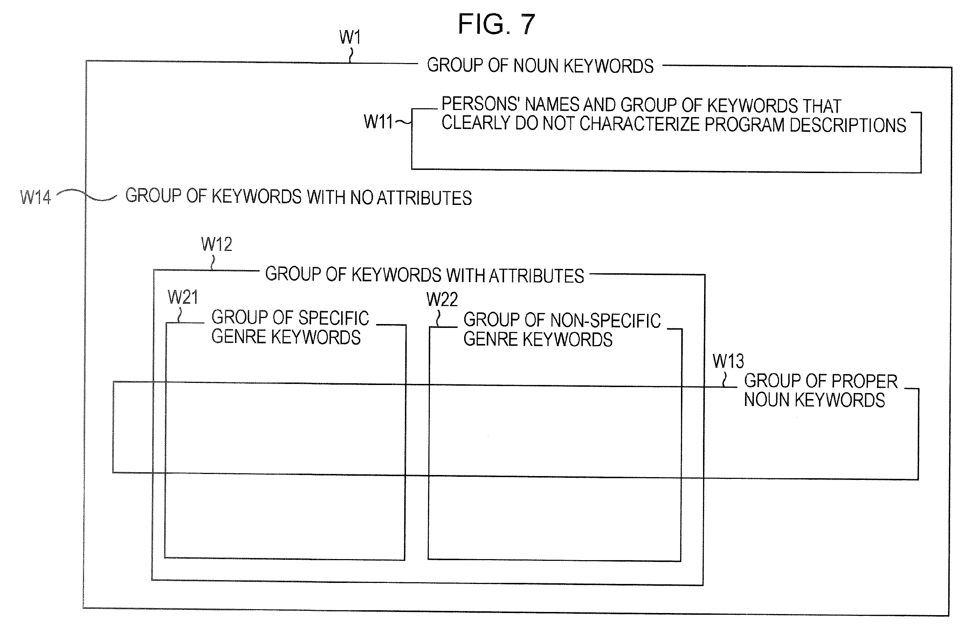

Words are classified as shown in Fig. 7. That is, a group of noun keywords W1 is generated by a morphological analysis. The group of noun keywords W1 includes a group of personal names and keywords that clearly do not represent features of program description (have little relevance to the substance of program description) W11, a group of keywords W12, a group of other keywords with no attributes W14, and a group of proper-noun keywords W13 classified separately from the above groupings. In addition, the group of keywords with attributes W12 further includes a group of specific-genre keywords S12 having keyword attributes of a specific genre, and a group of non-specific-genre keywords S22 other than the specific-genre keywords.

By identifying the word classes of keywords classified by a morphological analysis process, the exclusion processing section 15a can recognize the personal names and the group of keywords that clearly do not represent features of program description W11, and thus excludes those words from the morphological analysis result buffer 17.

In step S6, the occurrence frequency counting section 23 sequentially reads the words accumulated in the morphological analysis result buffer 17, counts the frequency of occurrence of the same word, and on the basis of the occurrence frequency, sorts the words by the highest occurrence frequency.

In step S7, the genre extracting section 19 extracts information of the genre of a predetermined program from the EPG information and supplies the information to the keyword extracting section 18. The genre of a predetermined program refers to the genre of a program that is displayed in the display field 102.

In step S8, the genre keyword extracting section 18a of the keyword extracting section 18 accesses the attribute storing section 20, and on the basis of the genre information supplied from the genre extracting section 19, identifies the keyword attributes to be extracted.

In step S9, the genre keyword extracting section 18a initializes a counter i (not shown) indicating the rank order of occurrence frequency to 1.

In step S10, the genre keyword extracting section 18a makes inquiry to the occurrence frequency counting section 23, and extracts from the morphological analysis result buffer 17 a word with the i-th highest occurrence frequency. The genre keyword extracting section 18a then determines whether or not the word belongs to a group of keywords of a specific genre corresponding to one of groups of genre keywords W21-1 to W21-n shown in Fig. 7, that is, whether or not the word belongs to keyword attributes that match the genre of a program. In step S10, if, for example, the word belongs to keyword attributes of a genre to be extracted, in step S11, the word with the i-th highest occurrence frequency is stored into the keyword extraction result storing section 21, and the process proceeds to step S12.

On the other hand, if it is determined in step S10 that the word does not belong to keyword attributes to be extracted, the processing of step S11 is skipped, and the process proceeds to step S12.

In step S12, the genre keyword extracting section 18a determines whether or not the number of words stored in the keyword extraction result storing section 21 is equal to or larger than a predetermined number, and if the number of words is less than the predetermined number, the process proceeds to step S13.

In step S13, the genre keyword extracting section 18a accesses the morphological analysis result buffer 17, and determines whether or not processing has been finished with respect to all of the words. If processing has not been finished with respect to all of the words, the process proceeds to step S14.

In step S14, the genre keyword extracting section 18a increments the counter i by 1, and the process returns to step S10.

That is, the processing from steps S10 to S14 is repeated until it is determined in step S12 that a predetermined number of words serving as keywords to be extracted have been stored into the keyword extraction result storing section 21, or until it is determined with respect to every one of words whether or not the word belongs to keyword attributes to be extracted.

If it is determined in step S12 that a predetermined number of words serving as keywords to be extracted have been stored into the keyword extraction result storing section 21, in step S16, an output section 22 outputs the extracted words, which are stored in the keyword extraction result storing section 21, to the display section 6, and causes the display section 6 to display the extracted words.

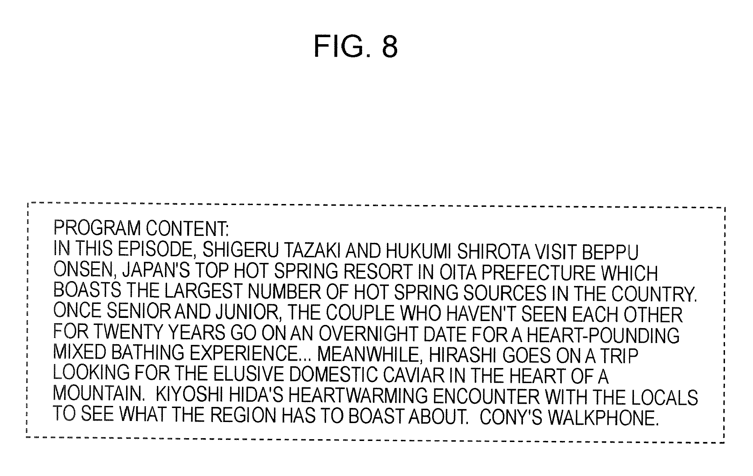

That is, if, by the processing of step S3, text data as shown in Fig. 8 is extracted, the following processing is carried out. In this case, the following extracted text data is shown in Fig. 8: "In this episode, Shigeru Tazaki and Hukumi Shirota visit Beppu Onsen, Japan's top hot spring resort in Oita prefecture which boasts the largest number of hot spring sources in the country. Once senior and junior, the couple who haven't seen each other for twenty years go on an overnight date for a heart-pounding mixed bathing experience... Meanwhile, Hirashi goes on a trip looking for the elusive domestic caviar in the heart of a mountain. Kiyoshi Hida's heartwarming encounter with the locals to see what the region has to boast about."

For example, in this case, when a morphological analysis is carried out through the processing of step S4, the following nouns will be sequentially extracted: "Shigeru Tazaki, Hukumi Shirota, Beppu Onsen, Japan's top, hot spring, Oita prefecture, hot spring sources, senior, junior, ...".

If, through the processing of step S7, it is found that the main genre of a program is Variety, and the sub-genre is Travel Variety, the keywords attributes to be extracted are as follows: "Country, Province, Prefecture, City, Town, Village, and Special Ward, Street, Branch Administrative Office, Foreign Place Name, Gallery-Museum, Zoo-Botanical Garden-Aquarium, Event, Festival, Station, Train Line, Road Facilities, Land, Sea, and Air Routes, Vehicle, Sight-seeing, Natural Topography, and Hot Spring", so "Oita prefecture, Beppu Onsen, and caviar ..." are sequentially extracted.

Therefore, even with the extracted words alone, it can be recognized that the program is related to Beppu Onsen in Oita prefecture, and also that there is a topic about caviar, so it can be recognized that the program is a travel program, and the topic is about Beppu Onsen. Further, instead of extracting keywords endlessly, it is possible to extract only a predetermined number of words with high occurrence frequencies, thereby making it possible to efficiently extract characteristic words with high occurrence frequencies. This enables features of a program to be more readily recognized.

On the other hand, in step S13, if, although it has been determined with respect to every one of words with the keyword attributes of a specific genre whether or not the word belongs to keyword attributes to be extracted, that is, although it has been determined with respect to every one of keywords whether or not the keyword belongs to keyword attributes to be extracted, the number of extracted keywords is still less than a predetermined number, in step S15, the proper-noun extracting section 18b executes an out-of-genre-keyword extracting process.

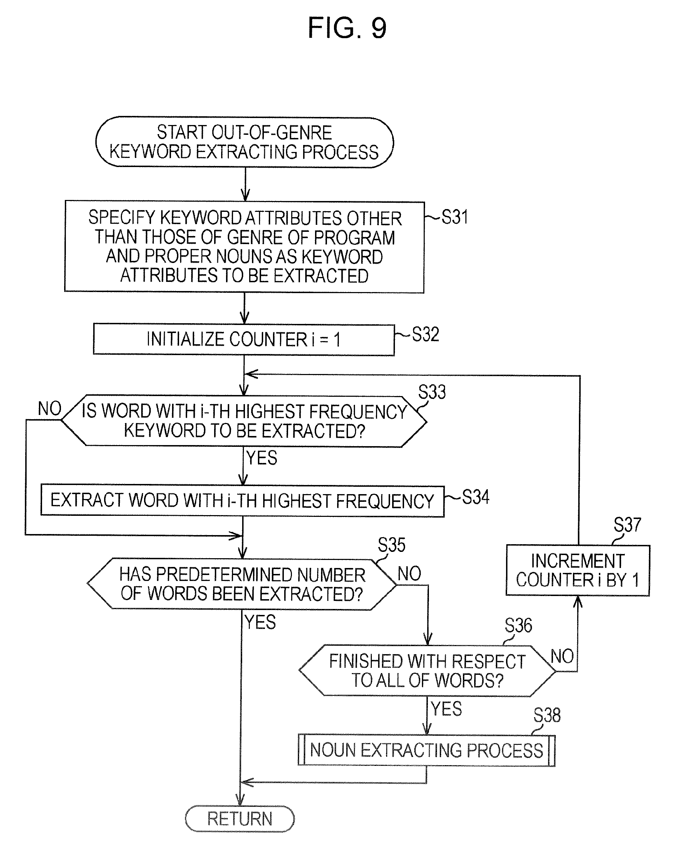

Now, the out-of-genre-keyword extracting process will be described with reference to Fig. 9.

In step S31, the proper-noun extracting section 18b of the keyword extracting section 18 accesses the attribute storing section 20, and identifies keyword attributes relating to a specific genre other than that of a program displayed in the display field 102, that is, attributes that do not match the genre of the program (attributes other than the attributes that have relevance to the genre) and proper nouns, as the target keyword attributes to be extracted.

In step S32, the proper-noun extracting section 18b initializes the counter i (not shown) indicating the rank order of occurrence frequency to 1.

In step S33, the proper-noun extracting section 18b makes inquiry to the occurrence frequency counting section 23, and extracts a word with the i-th highest occurrence frequency from the morphological analysis result buffer 17. The proper-noun extracting section 18b then determines whether or not the word belongs to keywords attributes of a specific genre which do not match a program displayed in the display field 102, that is, non-specific-genre keyword attributes or proper-noun keyword attributes which are to be extracted, that is, for example, whether or not the word belongs to, of the group of keywords with attributes W12 shown in Fig. 7, the group of non-specific-genre keywords W22 that do not match a program displayed in the display field 102, or is a proper-noun keyword belonging to the group of proper-noun attributes W13. If, in step S33, the word belongs to non-specific-genre keyword attributes of a genre not matching a program displayed in the display field 102 or proper-noun attributes, in step S34, the word with the i-th highest occurrence frequency is stored into the keyword extraction result storing section 21, and the process proceeds to step S35.

On the other hand, if it is determined in step S33 that the word does not belong to keyword attributes of a non-specific genre which do not match a program displayed in the display field 102 or proper-noun keyword attributes which are to be extracted, the processing of step S34 is skipped, and the process proceeds to step S35.

In step S35, the proper-noun extracting section 18b determines whether or not the number of words stored in the keyword extraction result storing section 21 is equal to or larger than a predetermined number, and if the number of words is less than the predetermined number, the process proceeds to step S36.

In step S36, the proper-noun extracting section 18b accesses the morphological analysis result buffer 17, and determines whether or not processing has been finished with respect to all of the words. If processing has not been finished with respect to all of the words, the process proceeds to step S37.

In step S37, the proper-noun extracting section 18b increments the counter i by 1, and the process returns to step S33.

That is, the processing of steps S33 to S37 is repeated until it is determined in step S35 that a predetermined number of keywords relating to the genre of a program displayed in the display field 102 which are to be extracted, a predetermined number of words with attributes of a non-specific genre which do not match the program displayed in the display field 102, and a predetermined number of keywords with proper-noun keyword attributes have been stored into the keyword extraction result storing section 21, or until it has been determined with respect to every one of words whether or not the word is a word having a keyword attribute of a non-specific genre which does not match the program displayed in the display field 102 and which is a keyword attribute to be extracted, or is a proper-noun.

Then, if it is determined in step S35 that a predetermined number of keywords relating to the genre of a program displayed in the display field 102 which are to be extracted, a predetermined number of words with attributes relating to a non-specific genre which do not match the program displayed in the display field 102, and a predetermined number of keywords with proper-noun keyword attributes have been stored into the keyword extraction result storing section 21, the outer-of-genre keyword extracting process ends, and the process returns to the process of the flowchart shown in Fig. 5. Then, in step S16, the output section 22 outputs the extracted words stored in the keyword extraction result storing section 21 to the display section 6, and causes the display section 6 to display the extracted words.

On the other hand, in step 536, if, although it has been determined with respect to every one of words whether or not the word is a word having an attribute of a non-specific genre which does not match the program displayed in the display field 102 or a proper noun which is a keyword attribute to be extracted, that is, although it has been determined with respect to every one of keywords whether or not the keyword is a word having an attribute of a non-specific genre which does not match the program displayed in the display field 102 or a proper noun which is a keyword attribute to be extracted, the number of extracted keywords is still less than a predetermined number, in step S38, the noun extracting section 18c executes a noun extracting process.

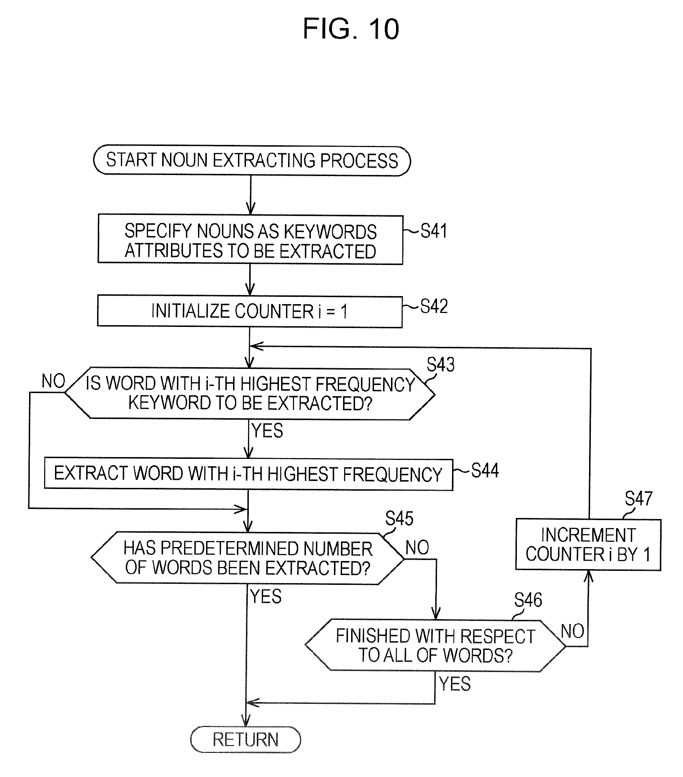

Now, the noun extracting process will be described with reference to the flowchart of Fig. 10.

In step S41, the noun extracting section 18c of the keyword extracting section 18 accesses the attribute storing section 20, and identifies nouns as the keyword attributes to be extracted.

In step S42, the noun extracting section 18c initializes the counter i (not shown) indicating the rank order of occurrence frequency to 1.

In step S43, the noun extracting section 18c makes inquiry to the occurrence frequency counting section 23, and extracts a word with the i-th highest occurrence frequency. The noun extracting section 18c then determines whether or not the word belongs to proper-noun keyword attributes to be extracted, that is, for example, whether or not the word belongs to the group of noun keywords W1 shown in Fig. 7. It should be noted that at this point, extraction of words within the group of specific-genre keywords W21 and the non-specific-genre keywords S22 which belong to the group of keywords with attributes W12, and within the group of proper-noun keywords W13 has been finished already. Therefore, the word to be extracted at this point is essentially a word belonging to the group of noun keywords W1 excluding the group of personal names and keywords that clearly do not represent features of program description W11, the group of keywords with attributes W12, and the group of proper-noun keywords S13, that is, a word belonging to the group of keywords with no attributes W14 in the group of noun keywords W1.

In step S43, if, for example, the word belongs to noun keyword attributes to be extracted, in step S44, the word with the i-th highest occurrence frequency is stored into the keyword extraction result storing section 21, and the process proceeds to step S45.

On the other hand, if it is determined in step S43 that the word does not belong to proper-noun keyword attributes to be extracted, the processing of step S44 is skipped, and the process proceeds to step S45.

In step S45, the noun extracting section 18c determines whether or not the number of words stored in the keyword extraction result storing section 21 is equal to or larger than a predetermined number, and if the number of words is less than the predetermined number, the process proceeds to step S46.

In step S46, the noun extracting section 18c accesses the morphological analysis result buffer 17, and determines whether or not processing has been finished with respect to all of words. If processing has not been finished with respect to all of words, the process proceeds to step S47.

In step S47, the noun extracting section 18c increments the counter i by 1, and the process returns to step S43.

That is, the processing of steps S43 to S47 is repeated until it is determined in step S45 that a predetermined number of keywords have been stored into the keyword extraction result storing section 21 from the group of keywords with attributes W12, the group of proper-noun keywords W13, and the group of keywords with no attributes W14 which are to be extracted, or until processing is finished with respect to all of words.

Then, if it is determined in step S45 that a predetermined number of words have been stored into the keyword extraction result storing section 21 from the group of keywords with attributes W12, the group of proper-noun keywords W13, and the group of keywords with no attributes W14 which are to be extracted, of if it is determined in step S46 that processing has been finished with respect to all of words, the noun extracting process ends, and also the out-of-genre keyword extracting process ends. The process then returns to the flowchart of Fig. 5, and in step S16, the output section 22 outputs the extracted words stored in the keyword extraction result storing section 21 to the display section 6, and causes the display section 6 to display the extracted words.

The above-described processing can be summarized as follows. That is, in the processing of steps S10 to S14 in Fig. 5, words belonging to a group of specific-genre keywords relating to a specific genre (the genre of a program displayed in the display field 102) are extracted as keywords, and if the number of the extracted words is less than a predetermined number, then, through the processing of steps S33 to S38 in Fig. 9, words belonging to a group of keywords of a non-specific genre not matching the program displayed in the display field 102, or words belonging to a group of proper-noun keywords are extracted as keywords. If the number of the keywords thus extracted is still less than the predetermined number, then, through the processing of steps S43 to S47 in Fig. 10, words belonging to a group of keywords with no attributes are extracted as keywords.

Therefore, if the number of keywords included in a program displayed in the display field 102 is small, words belonging to a group of non-specific-genre keywords not matching the program displayed in the display field 102, or keywords belonging to a group of proper-noun keywords are extracted, and if the number of extracted words is still small even after adding the words belonging to the group of keywords of a non-specific genre not matching the program displayed in the display field 102, or the keywords belonging to the group of proper-noun keywords, then keywords are extracted from a group of keywords with no attributes. It is thus possible to increase the possibility of being able to extract a predetermined number of keywords.

Now, the description will return to the flowchart of Fig. 5.

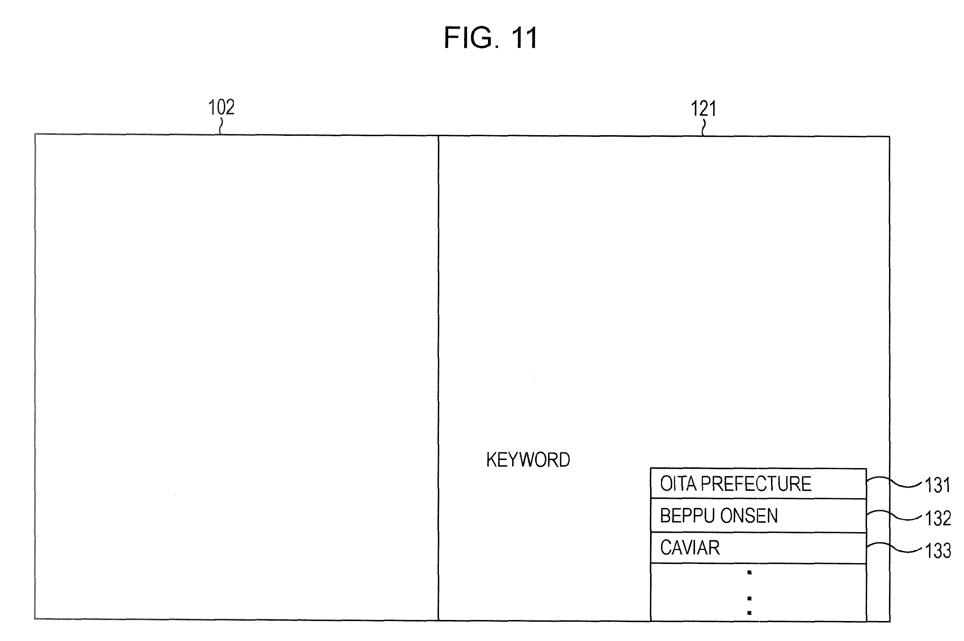

In step S16, the display section 6 displays keywords on a screen as shown in Fig. 11, for example. In Fig. 11, a keyword display field 121 is provided on the right side of the display field 102 for a standard broadcast program, and buttons 131 to 134, which are operated when selecting extracted keywords, are provided in association with the keywords. In Fig. 11, the button 131 is provided with respect to the keyword "Oita prefecture", the button 132 is provided with respect to the keyword "Beppu Onsen", and the button 133 is provided with respect to the keyword "caviar".

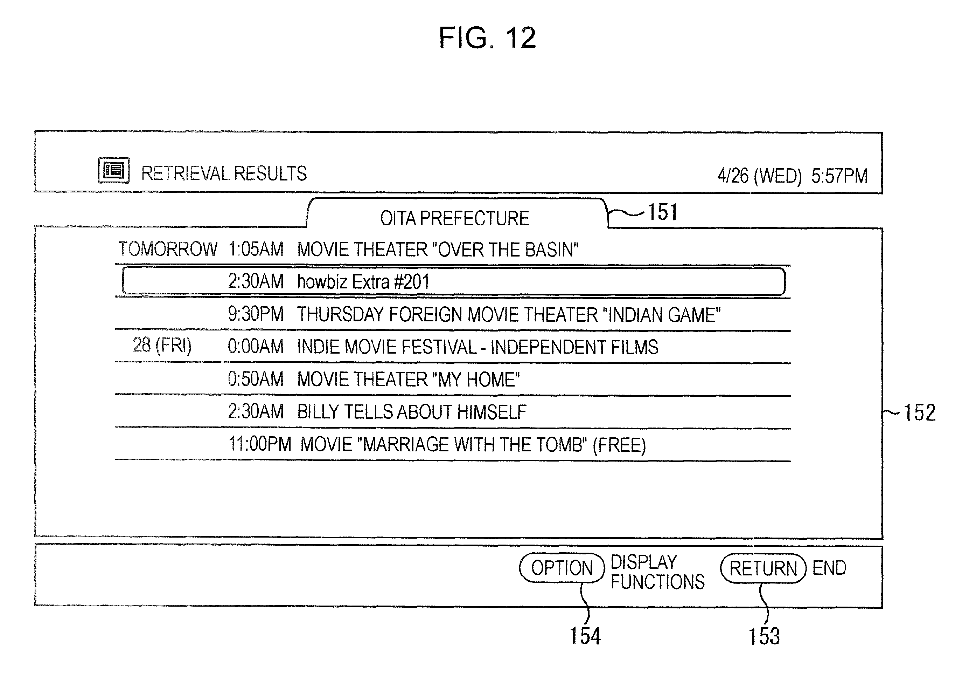

In step S17, the program retrieving section 25 determines whether or not a keyword has been selected by operating any one of the buttons 131 to 133 with the operating section 5. For example, if, in Fig. 11, the button 131 is operated with the operating section 5 and the keyword "Oita prefecture" is selected, in step S18, the program retrieving section 25 retrieves programs by the keyword "Oita prefecture" (retrieves programs with the keyword "Oita prefecture" included in the program information of EPG information) on the basis of EPG information supplied from the EPG acquiring section 12 or the iEPG acquiring section 14, and in step S19, the program retrieving section 25 displays the retrieval results on the display section 6 in the manner as shown in Fig. 12, for example. If no selection has been made in step S17, in step S20, it is determined whether or not termination has been designated, and if termination has not been designated, the process returns to step S17. If termination has been designated, the process ends.

In Fig. 12, there is provided a selected keyword tab 151 showing a selected keyword. In Fig. 12, the selected keyword "Oita prefecture" is shown. Provided below the selected keyword tab 151 is a retrieval result display field 152 which displays programs retrieved by the selected keyword. In Fig. 12, "Tomorrow 1:05 AM Movie Theater "Over the Basin"" is displayed in the uppermost column, "2:30 AM Howbiz Extra #201" is displayed in the second column, "9:30 PM Thursday Movie Theater "Indian Game"" is displayed in the third column, "0:00 AM Indie Movie Festival - Independent Films" is displayed in the fourth column, "0:50 AM Movie Theater "My Home"" is displayed in the fifth column, "2:30 AM Billy tells about Himself" is displayed in the sixth column, and "11:00 PM Movie "Marriage with the Tomb" (free broadcast)" is displayed in the seventh column, and the titles of the respective programs and their broadcasting hours are displayed. For example, recording reservation may be performed by selecting one of these program display fields. Below the retrieval result display field, a button 153 indicated as "Return" is provided on the right side. The button 153 is operated when terminating display of the selected keyword tab 151 to return. Further, a button 154 indicated as "Option" is displayed on the left side of the button 153. The button 154 is operated when executing operation of options.

According to the processing as described above, on the basis of keyword attributes identified by a genre, it is possible to extract from information included in the electric program guide (EPG) corresponding words as keywords in the order of the highest occurrence frequency. If the number of the extracted keywords is less than a predetermined number, words having proper-noun keyword attributes not related to the genre are extracted as keywords, and if the number of the extracted keywords is still less than the predetermined number, words having noun keyword attributes not related to the genre are extracted in addition to the keywords having keyword attributes specified by the genre and the proper-noun keywords.

As a result, it is possible to increase the possibility of being able to extract a predetermined number of keywords with high occurrence frequencies from text information included in EPG information. This makes it easier to secure a predetermined number of keyword choices so that the user can retrieve a wide variety of program keywords, and can also efficiently extract the most appropriate keywords that represent features of a program.

While the foregoing description is directed to the process of extracting keywords on the basis of the genre of the currently displayed program by using main and sub genres, other kinds of keywords may be selected. For example, as keyword attributes associated with a particular season, "Christmas", "New Year", "The Doll's Festival", "The Boy's Festival" or the like is set for the main genre or the like, and on the basis of information on the date and time at that moment, words having keyword attributes that are most suitable to describe the season may be extracted as keywords separately from the genre of the program.

Further, while the foregoing description is directed to the case where the metadata of content is EPG, the metadata may be other than EPG as long as it is metadata representing additional information of content. For example, the metadata may be EGC (Electronic Contents Guide) or the like.

Further, while the foregoing description is directed to the case where the content is a television program, the content may be other than a television program as long as it contains metadata. For example, the content may be dynamic image content or music content downloaded via a network, or may be dynamic image content or music content stored on a data storage medium such as a DVD (Digital Versatile Disc) or a BD (Blu-Ray Disc).

According to the above-described configuration, individual pieces of information included in the metadata of content are extracted in the order of the highest occurrence frequency. Therefore, it is possible to efficiently extract a predetermined number of the most appropriate keywords that represent features of content.

While the series of text processes described above can be executed by hardware, the series of processes can be also executed by software. If the series of processes is to be executed by software, a program constituting the software is installed from a recording medium into a computer built in dedicated hardware, or into, for example, a general purpose personal computer that can execute various processes when installed with various programs.

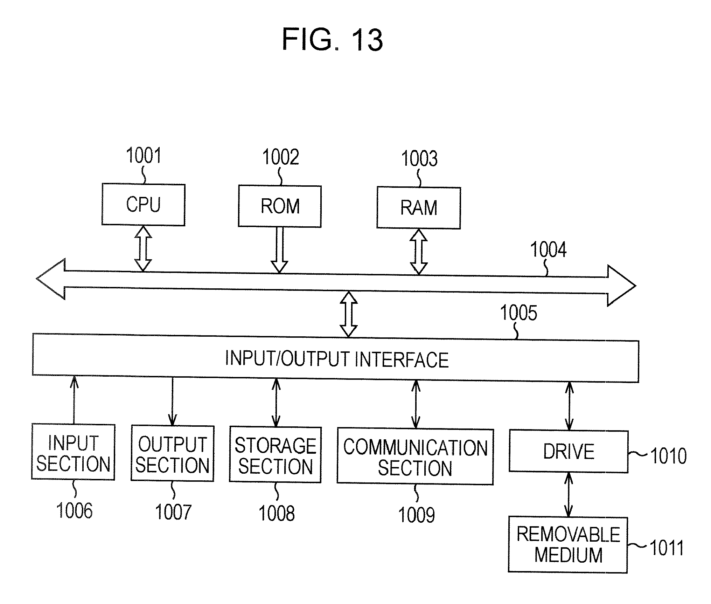

Fig. 13 shows an example of the configuration of a general purpose personal computer. This personal computer has a built-in CPU (Central Processing Unit) 1001. An input/output interface 1005 is connected to the CPU 1001 via a bus 1004. A ROM (Read Only Memory) 1002 and a RAM (Random Access Memory) 1003 are connected to the bus 1004.

Connected to the input/output interface 1005 are an input section 1006 that is an input device such as a keyboard or a mouse with which the user inputs an operation command, a storage section 1008 that is a hard disk drive or the like for storing programs or various kinds of data, and a communication section 1009 that is a LAN (Local Area Network) adapter or the like and executes a communication process via a network typically represented by the Internet. Also connected to the input/output interface 1005 is a drive 1010 that reads/writes data from/into a removable medium 1011 such as a magnetic disc (including a flexible disc), an optical disc (including a CD-ROM (Compact Disc Read-Only Memory) and a DVD (Digital Versatile Disc)), a magneto-optical disc (including an MD (Mini Disc), or a semiconductor memory.

The CPU 1001 executes various processes in accordance with a program stored in the ROM 1002, or a program that is read from the removal medium 1011 such as a magnetic disc, an optical disc, a magneto-optical disc, or a semiconductor memory to be installed into the storage section 1008, and is loaded into the RAM 1003 from the storage section 1008. Data necessary for the CPU 1001 to execute various processes or the like is also stored in the RAM 1003 as appropriate.

It should be noted that in this specification, the steps describing a program recorded in a recording medium include not only processes that are executed time sequentially in the order as they appear in the description but also processes that are executed in parallel or independently.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus comprising:
acquiring means (12, 14) for acquiring metadata of content;
morphological analysis means (15) for performing a morphological analysis of text information included in the metadata of the content;
genre extracting means (19) for extracting genre information for each individual content in the metadata of the content; and
keyword extracting means (18) for extracting words with attributes that have relevance to the genre of predetermined content in the metadata of the content by a morphological analysis result of the morphological analysis means (15).

2. The information processing apparatus according to Claim 1, wherein:
the morphological analysis means (15) further includes exclusion means (15a) for excluding personal names and words that have little relevance to the substance of description of the content; and
the keyword extracting means (18) extracts the words with the attributes that have relevance to the genre of the predetermined content in the metadata of the content, from the morphological analysis result of the morphological analysis means from which the personal names and the words that have little relevance to the substance of description of the content are excluded by the exclusion means (15a).

3. The information processing apparatus according to Claim 1, wherein:
the keyword extracting means (18) further includes proper-noun extracting means (18b) for extracting proper nouns and words with attributes other than the attributes that have relevance to the genre of the predetermined content from the morphological analysis result, if the number of the words with the attributes that have relevance to the genre of the predetermined content in the metadata of the content, which are extracted from the morphological analysis result of the morphological analysis means (15), is not larger than a predetermined number

4. The information processing apparatus according to Claim 1, further comprising storage means (20) for storing a correspondence between the genre in the metadata of the content and the attributes that have relevance to the genre,
wherein the keyword extracting means (18) determines the attributes that have relevance to the genre of the predetermined content in the metadata of the content on the basis of the correspondence between the genre and the attributes that have relevance to the genre which is stored in the storage means (20), and extracts the determined words from the morphological analysis result of the morphological analysis means (15).

5. The information processing apparatus according to Claim 1, further comprising counting means (23) for counting an occurrence frequency of the same word in the morphological analysis result of the morphological analysis means (15),
wherein the keyword extracting means (18) extracts the words with the attributes that have relevance to the genre of the predetermined content in the metadata of the content in the order of the highest occurrence frequency as counted by the counting means (23), from the morphological analysis result of the morphological analysis means (15).

6. The information processing apparatus according to Claim 1, wherein:
the genre includes a main genre and a sub-genre.

7. The information processing apparatus according to Claim 1, wherein:
the content includes a television program, and the metadata includes information related to the television program.

8. An information processing method comprising the steps of:
acquiring metadata of content;
performing a morphological analysis of text information included in the metadata of the content;
extracting genre information for each individual content in the metadata of the content; and
extracting words with attributes that have relevance to the genre of predetermined content in the metadata of the content by a morphological analysis result of the morphological analysis.

9. A program for causing a computer to execute processing comprising the steps of:
acquiring metadata of content;
performing a morphological analysis of text information of the metadata of the content;
extracting genre information for each individual content in the metadata of the content; and
extracting words with attributes that have relevance to the genre of predetermined content in the metadata of the content by a morphological analysis result of the morphological analysis.

10. A program storage medium which stores the program according to Claim 9.
